# EUROPÄISCHE PATENTANMELDUNG

(11) **EP 2 081 136 A1**
(43) Veröffentlichungstag der Anmeldung: **22.07.2009**
(21) Anmeldenummer: 09150872.1
(22) Anmeldetag: 19.01.2009
(51) Int. Cl.: G06Q 10/00, B65F 1/00

(54) **Einsatzplanungssystem für Serviceeinsätze an Objekten**

(30) Priorität: 18.01.2008 DE 102008005119
(71) Anmelder: OHO, Ofner & Hammecke Reinigungsgesellschaft mbH, 80939 München (DE)
(72) Erfinder: Ofner, Günter, 80636, München (DE)
(74) Vertreter: Hofmann, Harald

(57) **Zusammenfassung**

Die Erfindung betrifft ein Einsatzplanungssystem für Serviceeinsätze an Objekten, sowie ein entsprechendes Verfahren. Das Einsatzplanungssystem umfasst eine Vielzahl von Kennungsträgem, wobei jeder Kennungsträger einem bestimmten Objekt zugeordnet ist und eine Kennung umfasst, die das bestimmte Objekt eindeutig identifiziert; ein mobiles Datenerfassungsgerät, das ausgelegt ist zum Erfassen und temporären Speichern einer Vielzahl von Kennungen und von Objektzustandsdaten, die jeweils einer bestimmten Kennung zugeordnet sind; einen Datenspeicher zur Speicherung der von dem mobilen Dateneingabegerät temporär gespeicherten Kennungen und Objektzustandsdaten, wobei der Datenspeicher mit dem mobilen Datenerfassungsgerät zur Übermittlung der gespeicherten Kennungen und der Objektzustandsdaten zumindest mittelbar koppelbar ist; und ein Auswertungsmodul, das ausgelegt ist, auf die im Datenspeicher gespeicherten Kennungen und Objektzustandsdaten zuzugreifen und diese zu analysieren.

## Beschreibung

Die Erfindung bezieht sich auf Einsatzplanungssysteme und insbesondere auf Einsatzplanungssysteme für Serviceeinsätze an Objekten.

Serviceeinsätze an Objekten, die bedarfsabhängig betreut werden müssen, werden mehr und mehr von spezialisierten Dienstleistungsunternehmen anstelle der Eigentümer der Objekte durchgeführt. Durch die Spezialisierung der Dienstleistungsunternehmen kann häufig eine bessere Qualität der Betreuung zu geringeren Kosten erreicht werden. Für diese Dienstleistungsunternehmen ist es wichtig, möglichst wirtschaftlich zu arbeiten. Zu diesem Zweck versuchen solche Unternehmen, die vorhandenen Ressourcen effizient einzusetzen. Insbesondere sollen unnötige Serviceeinsätze vermieden werden. Beispielsweise wird ein Unternehmen, das mit der Leerung von Papierkörben an Bus-, Straßenbahn, U-Bahn- oder S-Bahn-Haltestellen beauftragt ist, anstreben, erst dann einen Serviceeinsatz an einer bestimmten Haltestelle vorzunehmen, wenn dies erforderlich ist. Andererseits sollte die Leerung im Normalfall so rechtzeitig erfolgen, dass eine Überfüllung des Papierkorbs vermieden wird. Überfüllte Papierkörbe sind nämlich häufig Gegenstand von Beschwerden von Fahrgästen bei den Verkehrsbetrieben, die die Dienstleistungsunternehmen beauftragen. Wenn sich die Beschwerden häufen, kann dies für das Dienstleistungsunternehmen zu Gewinneinbußen oder sogar zum Verlust des Auftrags führen. Das Dienstleistungsunternehmen hat also ein Interesse daran, den optimalen Zeitpunkt zur Leerung eines Papierkorbs zu bestimmen. Im Folgenden wird die Leerung von Papierkörben an Haltestellen als ein Beispiel für Serviceeinsätze an Objekten im öffentlichen Raum angeführt. Die folgenden Ausführungen gelten jedoch auch für andere Objekte, wie z.B. zu reinigende Gehwege, zu gießende Pflanzenkübel usw..

Die Einsatzplanung für Serviceeinsätze an Objekten wird heutzutage meist nach festgelegten Plänen vorgenommen. Beispielsweise werden Briefkästen nach einem strikt vorgegebenen Zeitplan geleert, damit sich Briefkastenbenutzer auf die Leerungszeiten verlassen können.

Wenn im Gegensatz dazu der Zeitpunkt der Erbringung des Serviceeinsatzes nicht vorgeschrieben ist, dann hängt er meist vom vermuteten Objektzustand ab. Beispielsweise kann ein Papierkorb eine Vielzahl von Objektzuständen zwischen leer und stark überfüllt aufweisen. In diesen Fällen ist eine bedarfsangepasste Planung der Serviceeinsätze möglich und wünschenswert.

Die Einsatzplanung betrifft in der Regel nicht nur ein Objekt allein, sondern eine Gruppe von Objekten, die geografisch so angeordnet sind, dass sie auf effiziente Weise während einer Route angefahren werden können. Die Effizienz der Einsatzplanung hängt dann meist von der Erfahrung der Person ab, die die Einsatzplanung durchführt. Je nach Anzahl der zu betreuenden Objekte und der Komplexität der Einsatzplanung kann das Sammeln dieser Erfahrung lange dauern. Trotz aller Erfahrung kann es auch bei langjährigen Einsatzplanern dazu kommen, dass die Einsatzplanung anhand von einmal etablierten Routen vorgenommen wird, ohne jedoch innerhalb einer Route selber Änderungen vorzunehmen. Zwar lässt sich auch mit einer routen-basierten Planung eine Optimierung erreichen, aber innerhalb einer Route kann es trotzdem noch Routenpunkte bzw. Objekte geben, für die ein Serviceeinsatz nicht bei jedem Durchfahren der Route notwendig ist. Ein Neuplanen und Zusammenstellen von Routen ist in der Regel zu komplex für einen menschlichen Einsatzplaner, da nicht nur die vermuteten Objektzustände berücksichtigt werden müssen, sondern auch die geografische Lage der Objekte zueinander, um eine möglichst optimale Route planen zu können.

In der deutschen Patentanmeldung DE 199 16 415 A1 ist ein Verfahren zum Registrieren der Zeitdauer und des Zeitpunktes von unterschiedlichen Arbeitsvorgängen beschrieben, die in einem Krankenhaus durchgeführt werden. Bei diesem Verfahren werden bestimmte Zeitabschnitte und Tätigkeiten Zeittakt-Codes und Tätigkeits-Codes in Form von Stabcodes zugeordnet. Der Zeittakt-Code, der Tätigkeits-Code und der Zeitpunkt der Messung werden in einen Computer eingescannt bzw. miteinander verknüpft, um nach Auswertung in einer Auswerteeinheit mit einer Vielzahl anderer gleichartiger Messdaten über einem bestimmten Zeitintervall dargestellt zu werden. Dieses Zeitregistrierverfahren gewährleistet bei einer Vielzahl unterschiedlicher Arbeitsvorgänge deren exakte und fehlerfreie Erfassung und letztlich deren optimale Koordinierung. Das Verfahren erwähnt aber keine Objekte und deren Objektzustandsdaten. Die in einem Krankenhaus zu leistenden Tätigkeiten sind in der Regel unverzüglich nach ihrer Beauftragung zu vorzunehmen, so dass der Zeitpunkt der Tätigkeit sich nicht anhand eines vermuteten bzw. geschätzten Objektzustandes im Voraus bestimmen lässt. Auch ist in DE 199 16 415 A1 kein mobiles Datenerfassungsgerät beschrieben.

Die Gebrauchsmusterschrift DE 20 2006 019 635 U1 beschreibt eine Vorrichtung zur Überwachung von Arbeitsabläufen, mit der beispielsweise die korrekte Anbringung von Werbeplakaten überprüft und dokumentiert werden kann. Fehler bei der Anbringung der Werbeplakate können rasch entdeckt und behoben werden. Die Vorrichtung umfasst im wesentlichen ein Mobiltelefon mit integrierter Kamera und eine zentrale Rechnereinheit, mittels welcher ein Matrixcode o.ä. zur Identifizierung eines Standorts aufgenommen werden kann, sowie das Werbeplakat selber.

Zur optimalen Einsatzplanung von Serviceeinsätzen an den zu betreuenden Objekten werden ein Einsatzplanungssystem und eine Verfahren benötigt, die in der Lage sind, Daten über einen Zeitraum zu sammeln und diese Daten auszuwerten.

Die vorliegende Erfindung stellt ein Einsatzplanungssystem für Serviceeinsätze an Objekten bereit, das Folgendes umfasst:
- eine Vielzahl von Kennungsträgern, wobei jeder Kennungsträger einem bestimmten Objekt zugeordnet ist und eine Kennung umfasst, die das bestimmte Objekt eindeutig identifiziert;
- ein mobiles Datenerfassungsgerät, das ausgelegt ist zum Erfassen und temporären Speichern einer Vielzahl von Kennungen und von Objektzustandsdaten, die jeweils einer bestimmten Kennung zugeordnet sind;
- einen Datenspeicher zur Speicherung der von dem mobilen Dateneingabegerät temporär gespeicherten Kennungen und Objektzustandsdaten, wobei der Datenspeicher mit dem mobilen Datenerfassungsgerät zur Übermittlung der gespeicherten Kennungen und der Objektzustandsdaten zumindest mittelbar koppelbar ist; und
- ein Auswertungsmodul, das ausgelegt ist, auf die im Datenspeicher gespeicherten Kennungen und Objektzustandsdaten zuzugreifen, diese zu analysieren und mittels der gespeicherten Kennungen und Objektzustandsdaten eine Optimierung eines Einsatzplans für zukünftige Serviceeinsätze an den Objekten durchzuführen.

Mit dem Einsatzplanungssystem gemäß der Erfindung werden zumindest zwei Ziele erreicht. Zum einen ist mit dem Einsatzplanungssystem eine einfache und zuverlässige Dokumentierung der Serviceeinsätze möglich. Dies dient einem Dienstleistungsunternehmen, das beispielsweise mit der Leerung von Papierkörben beauftragt ist, dazu, dem Auftraggeber Daten über die Häufigkeit und die Zeitpunkte der Serviceeinsätze zur Verfügung zu stellen. Diese Daten können gegenüber dem Auftraggeber auch als Nachweis für die geleisteten Serviceeinsätze herangezogen werden. Zum anderen lassen sich die gesammelten Daten auch analysieren, wodurch eine Identifizierung von besonders kritischen Objekten und z.B. Zeiten und wenig kritischen Objekten möglich ist. Die Einsatzplanung von Serviceeinsätzen an Objekten, bei denen die Notwendigkeit eines Serviceeinsatzes von dem Zustand des jeweiligen Objekts abhängt, unterscheidet sich von der Einsatzplanung von Serviceeinsätzen an Objekten, bei denen z.B. Serviceintervalle oder -zeitpunkte fest vorgeschrieben sind. Die Einsatzplanung von objektzustandsabhängigen Serviceeinsätzen kann nämlich mit Hilfe der Erfindung flexibler gestaltet werden, wenn die Notwendigkeit des Serviceeinsatzes vorab bestimmt oder geschätzt werden kann.

Der Kennungsträger und die Kennung dienen dazu, eine eindeutige, schnelle und zuverlässige Identifizierung eines bestimmten Objekts zu ermöglichen. Dadurch kann der Mitarbeiter, der den Serviceeinsatz vor Ort durchführt, ohne großen Aufwand die für die Identifizierung der Objekte notwendigen Daten erfassen. Das Erfassen erfolgt über das mobile Datenerfassungsgerät, welches der Mitarbeiter mit sich führt. Über das mobile Datenerfassungsgerät können auch Objektzustandsdaten eingegeben und erfasst werden. Das mobile Datenerfassungsgerät bietet genügend Speicherplatz für die zu erfassenden Daten. Der Mitarbeiter beginnt die Route beispielsweise mit einem mobilen Datenerfassungsgerät, von dem der Speicher noch leer ist. Der Mitarbeiter fährt die verschiedenen Objekte der aktuellen Route an und führt an jedem Objekt den Serviceeinsatz sowie die beschriebene Datenerfassung durch. Die Datenerfassung geschieht entweder vor dem eigentlichen Serviceeinsatz an einem Objekt (z.B. Leeren des Papierkorbs). Sie kann aber auch nach oder während dem eigentlichen Serviceeinsatz erfolgen. Nach Beendigung der Route sind auf dem mobilen Datenspeicher die erfassten Daten der angefahrenen Objekte gespeichert.

Zur Zuordnung der Objektzustandsdaten zu den Kennungen werden diese mit Bezug zueinander abgespeichert. Dies kann beispielsweise durch Speichern der Kennung und der Objektzustandsdaten in derselben Datenstruktur geschehen.

Nach der Rückkehr des Mitarbeiters von seiner Route werden die auf dem mobilen Datenerfassungsgerät gespeicherten Daten in einen Datenspeicher übertragen. Das Auswertungsmodul kann nun auf die Daten zugreifen, diese abrufen und beispielsweise als Tabellen oder Diagramme darstellen.

Im Rahmen der Optimierung können besonders serviceintensive Objekte identifiziert werden. Ebenso können Objekte identifiziert werden, die nicht sehr serviceintensiv sind. Mit diesen Informationen können zukünftige Routen geplant werden, bei denen serviceintensive Objekte häufiger berücksichtigt werden als andere. Insbesondere kann das Auswertungsmodul dazu ausgelegt sein, im Rahmen der Optimierung eine Serviceintensität der einzelnen Objekte zu bestimmen und die Serviceintensität für eine Häufigkeit der zukünftigen Serviceeinsätze zu berücksichtigen.

Als mobiles Datenerfassungsgerät eignen sich Laserscanner, Strich- bzw. Matrixcodelesegeräte, RFID-Lesegeräte, Magnetstreifenlesegeräte oder ähnliche Geräte.

Die Erfindung betrifft auch ein Verfahren zur Einsatzplanung von Serviceeinsätzen an Objekten. Dieses Verfahren umfasst:
- ein Erfassen von Objektzustandsdaten und einer Kennung während eines Serviceeinsatzes an einem bestimmten Objekt, wobei die Kennung dem bestimmten Objekt zugeordnet ist und das bestimmte Objekt eindeutig identifiziert;
- ein temporäres Speichern der Objektzustandsdaten und der Kennung auf einem mobilen Dateneingabegerät;
- ein Übermitteln der gespeicherten Kennung und der Objektzustandsdaten von dem mobilen Dateneingabegerät an einen Datenspeicher; und
- ein Auswerten der im Datenspeicher gespeicherten Kennungen und Objektzustandsdaten
- Optimieren eines Einsatzplanes für zukünftige Serviceeinsätze an den Objekten mittels der gespeicherten Kennungen und Objektzustandsdaten.

Mit dem Verfahren werden im Großen und Ganzen dieselben Zwecke bedient, wie mit dem bereits beschriebenen Einsatzplanungssystem.

Einige Ausführungsformen des Einsatzplanungssystems und des Verfahrens können noch weitere Merkmale aufweisen. Das Auswertungsmodul kann dafür ausgelegt sein, mittels der gespeicherten Kennungen und Objektzustandsdaten eine Optimierung eines Einsatzplans für zukünftige Serviceeinsätze an den Objekten durchzuführen. Ebenso kann das Verfahren eine Optimierung eines Einsatzplans für zukünftige Serviceeinsätze an den Objekten mittels der gespeicherten Kennungen und Objektzustandsdaten umfassen. Im Rahmen der Optimierung können besonders serviceintensive Objekte identifiziert werden. Ebenso können Objekte identifiziert werden, die nicht sehr serviceintensiv sind. Mit diesen Informationen können zukünftige Routen geplant werden, bei denen serviceintensive Objekte häufiger berücksichtigt werden als andere. Insbesondere kann das Optimieren des Einsatzplans für zukünftige Serviceeinsätze umfassen:
- Bestimmen von Serviceintensitäten der einzelnen Objekte;
- Berücksichtigung der Serviceintensitäten für eine Häufigkeit der zukünftigen Serviceeinsätze.

Das Auswertungsmodul kann weiterhin ausgelegt sein, im Zusammenhang mit der Optimierung des Einsatzplans die gespeicherten Kennungen und Objektzustandsdaten auf im Wesentlichen regelmäßige Muster zu untersuchen. Auch das Verfahren kann vorsehen, dass während des Optimierens des Einsatzplans die gespeicherten Kennungen und Objektzustandsdaten auf im Wesentlichen regelmäßige Muster untersucht werden. Neben einer qualitativen Bewertung der einzelnen Objekte hinsichtlich ihrer Servicebedürftigkeit, wird im Rahmen einer Untersuchung auf regelmäßige Muster auch ein zeitlicher Verlauf berücksichtigt. Über statistische Auswertungen können weitere Erkenntnisse gewonnen werden. Die Objektzustandsdaten von verschiedenen Objekten könnten auch korreliert oder miteinander verglichen werden. Unter Umständen kann aus der Kenntnis eines Objektzustandes von einem bestimmten Objekt der (noch nicht bekannte) Objektzustand eines anderen Objekts geschätzt werden (z.B.: wenn Papierkorb A voll, dann oft auch Papierkorb B voll). Auch diese Information kann bei der Entscheidung helfen, ob ein bestimmter Standort bei der nächsten Route angefahren werden sollte, oder nicht.

Die Objektzustandsdaten können zumindest eines von Verschmutzungsgrad, Umfeldverschmutzung und Füllstand umfassen. Von einem Mitarbeiter, der mit dem Serviceeinsatz an Objekten (z.B. Bushaltestellen oder Papierkörbe) beauftragt ist, sind solche Objektzustandsdaten einfach zu bestimmen. Die Objektzustandsdaten können in das mobile Datenerfassungsgerät beispielsweise über eine Tastatur, Touchscreen, Spracheingabe, einen Strichcodeleser o.ä. eingegeben werden. Gegebenenfalls können noch besondere Objektzustandsdaten berücksichtigt werden, wie zum Beispiel ein defekter Papierkorb, der bei der nächsten Gelegenheit repariert werden muss. Solche Objektzustände können beispielsweise durch eine Text- oder Sprachnachricht auf dem mobilen Datenerfassungsgerät gespeichert werden.

Die Kennung kann von einem Strichcode, einem Matrixcode, einem alphanumerischen Code oder einer RFID-Kennung repräsentiert werden. Diese Techniken lassen eine eindeutige Identifizierung des jeweiligen Objekts zu. Die jeweiligen Codes oder RFID-Kennungen können für die Zwecke des jeweiligen Unternehmens zugewiesen werden. Das Unternehmen kann die Strichcodes oder RFID-Kennungen in einer Datenbank oder einer Tabelle führen, die die Objekte zum Beispiel mit ihrem Standort spezifiziert und beschreibt. Dadurch wird die Benutzung der Codes oder der RFID-Kennung für menschliche Benutzer erleichtert, für welche ein Standortname verständlicher ist als eine Standortnummer. Als Standortnamen können Haltestellennamen dienen, die gegebenenfalls noch mit Zusatzinformationen vervollständigt sein können.

Die Erfindung betrifft auch ein Computerprogrammprodukt mit Programm-Mitteln, um Schritte des beschriebenen Verfahrens auszuführen, wenn das Programm in dem Computer ausgeführt wird. Das Computerprogrammprodukt ist in einen Speicher eines Computer oder eines mobilen Datenerfassungsgeräts ladbar.

### Kurze Beschreibung der Figuren

Fig. 1 zeigt einen schematischen Überblick über das Einsatzplanungssystem gemäß der Erfindung.
Fig. 2 zeigt ein Flussdiagramm für das Verfahren gemäß der Erfindung.
Fig. 3 zeigt ein Diagramm, in dem der zeitliche Verlauf eines Objektzustandes dargestellt ist.
Fig. 4 zeigt einen schematischen Routenplan.
Fig. 5 zeigt einen schematischen Routenplan und einen schematischen Verlauf der tatsächlichen Route.
Fig. 6 zeigt eine beispielhafte Bildschirmdarstellung der Abweichungen zwischen Routenplan und tatsächlicher Route.

### Detaillierte Beschreibung der Figuren

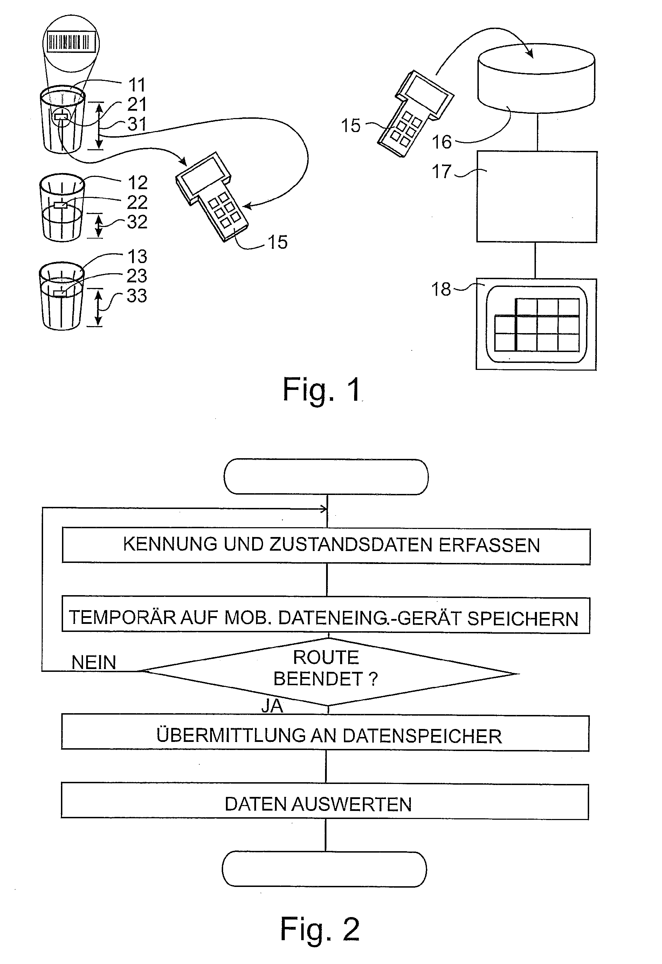

In Figur 1 sind drei Objekte 11, 12, 13 dargestellt, die Gegenstand von Serviceeinsätzen sind. Im vorliegenden Fall handelt es sich um Papierkörbe, die beispielsweise an Haltestellen aufgestellt sein können. Jedes der Objekte 11, 12, 13 weist einen Kennungsträger 21, 22 bzw. 23 auf. Dieser Kennungsträger kann ein Aufkleber, eine Plakette, ein RFID-Chip oder etwas ähnliches sein. Jeder Kennungsträger trägt eine Kennung, wie z.B. einen Strichcode. Für den Kennungsträger 21 des Objekts 11 ist in Figur 1 eine Vergrößerung der Kennungsträgers 21 dargestellt. Die Kennung könnte auch direkt auf das Objekt aufgebracht sein. In diesem Fall stellt das Objekt selber den Kennungsträger dar.

Für jedes der Objekte 11, 12, 13 ist in Figur 1 auch der aktuelle Füllstand 31, 32, bzw. 33 dargestellt. Der Füllstand ist ein Objektzustand. Objekt 11 ist voll, Objekt 12 ist zwischen 1/4 und 1/2 voll und Objekt 13 ist zwischen 3/4 und 4/4 voll.

Bei der Durchführung des Serviceeinsatzes an einem der Objekte 11, 12 oder 13 nimmt die Person, die den Serviceeinsatz durchführt, die Kennung des entsprechenden Objekts 11, 12 oder 13 auf. Dies erfolgt über ein mobiles Dateneingabegerät 15, im Folgenden auch "Stift" genannt. Um die Kennung des Objekts 11 zu erfassen, hält die Person das mobile Dateneingabegerät 15 vor den Kennungsträger 12. Durch optische Abtastung oder über Funk wird die Kennung von dem mobilen Dateneingabegerät gelesen bzw. an dieses übertragen. Der Benutzer gibt noch den Füllstand des Objekts über eine Tastatur ein. Die Eingabe des Füllstandes oder anderer Objektzustandsdaten kann alternativ auch über Strichcodes, Matrixcodes, Spracheingabe oder dergleichen erfolgen.

Bei den Objekten 12 und 13 wird in analoger Weise vorgegangen, wie an Objekt 11. Die jeweiligen Objektzustandsdaten werden auf dem mobilen Dateneingabegerät 15 temporär zwischengespeichert, und zwar in der Regel bis die Route beendet ist. Beim Abspeichern werden die Objektzustandsdaten mit der Kennung des jeweiligen Objekts verknüpft, so dass eine Zuordnung zwischen Objekt und Objektzustand hergestellt wird. Es kann vorgesehen sein, dass zusätzliche Daten abgespeichert werden, wie das Datum und die Uhrzeit eines jeden Serviceeinsatzes.

Nachdem die Route beendet und die Person, die die Serviceeinsätze durchgeführt hat, wieder zurück ist, werden die temporär gespeicherten Daten von dem mobilen Dateneingabegerät 15 auf einen Datenspeicher 16 gespielt. Es kann auch vorgesehen werden, dass die Übertragung der Daten vom mobilen Dateneingabegerät 15 auf den Datenspeicher 16 über ein Netzwerk erfolgt, beispielsweise ein Telefonnetz, ein Mobilfunknetz oder ein Computernetz. In diesem Fall ist die physikalische Anwesenheit des mobilen Dateneingabegeräts 15 am Ort des zentralen Datenspeichers 16 nicht erforderlich.

Bei Bedarf können die nun auf dem Datenspeicher 16 gespeicherten Daten von einem Auswertungsmodul 17 abgerufen werden. Das Auswertungsmodul 17 kann dazu dienen, bestimmte Muster in den Objektzustandsdaten festzustellen und sichtbar zu machen. Auch kann das Auswertungsmodul 17 dazu verwendet werden, Abweichungen zwischen einem Routenplan und der tatsächlich gefahrenen Route zu bestimmen. Zur Anzeige kann ein Monitor 18 dienen.

Figur 2 zeigt ein Flussdiagramm des Verfahrens gemäß der vorliegenden Erfindung. Nach dem Start des Verfahrens werden zunächst die Kennung und die Zustandsdaten erfasst. Anschließend werden die Kennung und die Zustandsdaten temporär zwischengespeichert. Dies erfolgt bei jedem Standort einer tatsächlich durchfahrenen Route solange, bis die Route beendet ist. Nach Beendigung der Route werden die temporär gespeicherten Daten an den Datenspeicher übermittelt. Es folgt eine Datenauswertung der auf dem Datenspeicher gespeicherten Daten.

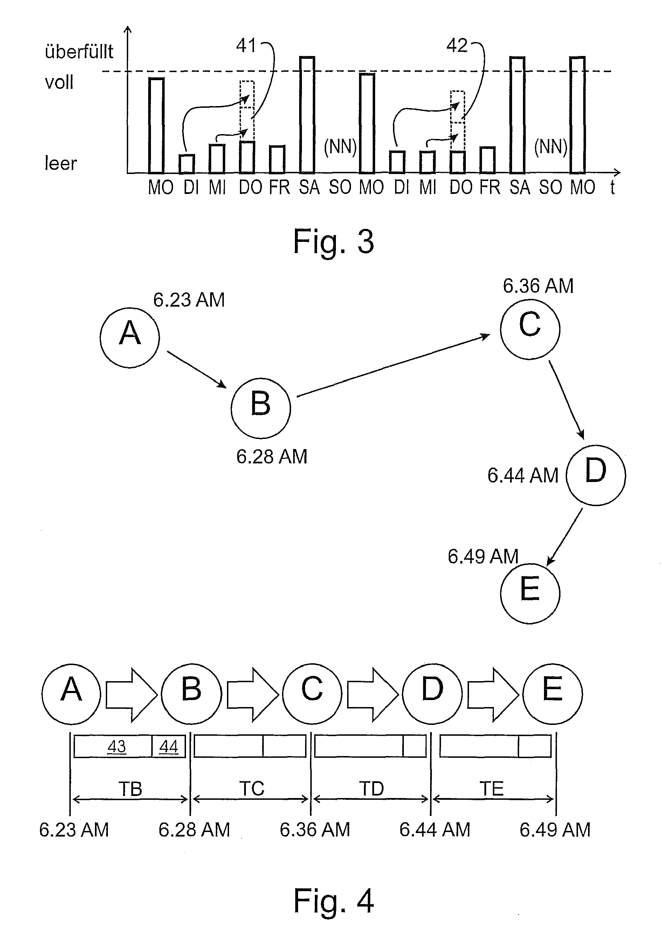

Figur 3 zeigt den zeitlichen Verlauf eines Objektzustands. Der gezeigt Objektzustand ist der Füllstand eines bestimmten Papierkorbs über 15 Tage, die mit ihrem jeweiligen Wochentag bezeichnet sind (MO: Montag, DI: Dienstag, MI: Mittwoch, DO: Donnerstag, FR: Freitag, SA: Samstag, SO: Sonntag). An den beiden Sonntagen wurde kein Serviceeinsatz durchgeführt, so dass für diese beiden Tage keine Daten vorliegen ("NN"). Das Auswertungsmodul kann verschiedene Muster in dem zeitlichen Verlauf identifizieren. Die Füllstände vor den Montags- und Samstagsleerungen sind immer voll bis überfüllt. Dagegen sind die Füllstände an den Wochentagen Dienstag bis Freitag nur "leer" bis "1/4 voll". Dies kann daran liegen, dass der Papierkorb an einem Standort steht, der insbesondere am Wochenende stark frequentiert wird.

Das Ergebnis der Auswertung ist in Figur 3 anhand der Teilbalken 41 und 42 dargestellt, die gestrichelt gezeichnet sind. Dieses Ergebnis bedeutet, dass die Leerung an den Wochentagen Dienstag und Mittwoch auf den Donnerstag verschoben werden kann. Somit muss dieser Standort dienstags und mittwochs nicht angefahren werden. Eine weitere Verschiebung der Leerung auf Freitag ist dagegen nur bedingt ratsam, da in diesem Fall eine Überfüllung droht. Neben den möglichen Beschwerden von Fahrgästen oder Anwohnern bedeutet ein überfüllter Papierkorb in der Regel auch einen erheblichen Mehraufwand für die Person, die den Serviceeinsatz durchführt, da in diesem Fall die Reinigung des Umfelds des Papierkorbs länger dauert. Des Weiteren deuten die Füllstände an den Wochentagen Samstag und Montag darauf hin, dass an diesem Standort eine größere Kapazität des Papierkorbs oder ein weiterer Papierkorb sinnvoll ist.

In Figur 4 ist ein Routenplan schematisch auf zwei Arten dargestellt. In der oberen Darstellung von Figur 4 ist die geografische Situation von fünf Standorten A, B, C, D und E dargestellt. Der Routenplan sieht vor, dass diese Standorte in der alphabetischen Reihenfolge durchfahren werden. Gegebenenfalls ist für jeden Standort auch eine Uhrzeit geplant. Im unteren Teil von Figur 4 ist der Routenplan bezogen auf die Zeit dargestellt (nicht maßstäblich). Dabei bezeichnen die Zeiten TB, TC, TD und TE die Zeiten, die laut Routenplan von einem Standort zum nächsten Standort benötigt werden. Jede der Zeiten TB, TC, TD und TE setzt sich aus einer Fahrzeit bzw. Wegzeit 43 und einer Serviceeinsatzzeit bzw. Verweildauer 44 zusammen, wie am Beispiel der Zeit TB stellvertretend für die Zeiten TC, TD und TE dargestellt.

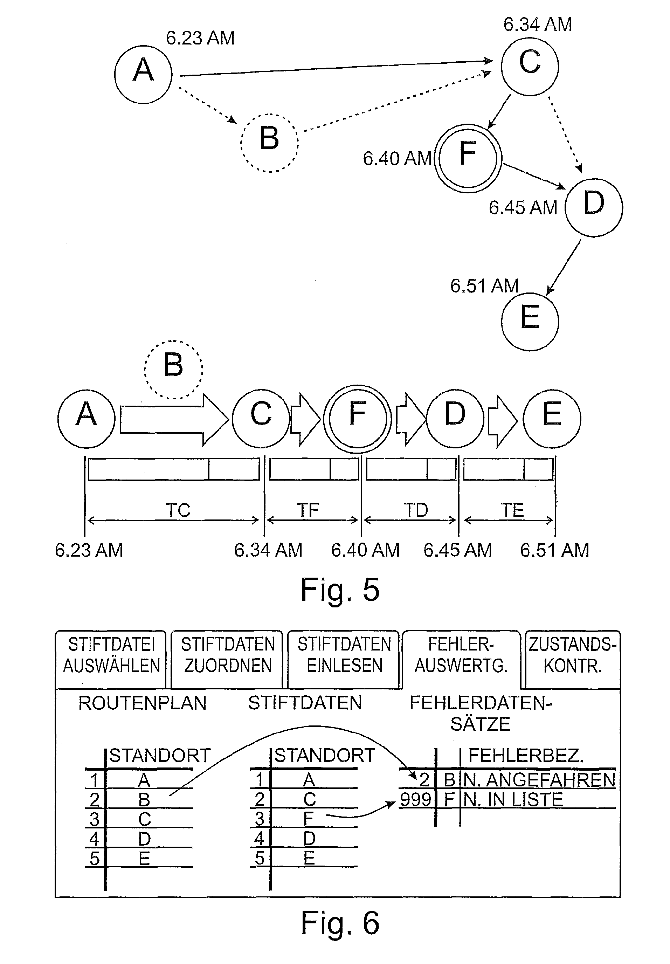

Figur 5 zeigt den Routenplan aus Figur 4 und zum Vergleich die tatsächlich durchgeführte Route. Abweichend vom Routenplan wurde während der tatsächlichen Route der Standort B (gestrichelt gezeichnet) nicht angefahren, sondern direkt zu Standort C übergegangen. Standort F (mit Doppellinie gezeichnet) war dagegen im Routenplan nicht vorgesehen, wurde aber trotzdem während der tatsächlichen Route bedient. Der Standort F wurde zwischen die planmäßigen Standorte C und D eingeschoben.

In Figur 6 ist dargestellt, wie die Abweichung zwischen Routenplan und tatsächlicher Route verarbeitet werden kann. Figur 6 zeigt einen Dialog einer grafischen Oberfläche eines Auswertungsprogramms mit verschiedenen Reitern für diverse Unterdialoge. In Figur 6 ist der Unterdialog mit dem Titel "FEHLERAUSWERTG." für "Fehlerauswertung" ausgewählt.

Dieser Unterdialog zeigt die drei Tabellen "ROUTENPLAN", "STIFTDATEN" und "FEHLERDATENSÄTZE". Die Tabellen beziehen sich auf das in Figur 5 dargestellte Beispiel. Die Tabelle "STIFTDATEN" hat ihren Namen von der Speicherung der tatsächlichen Routendaten auf einem mobilen Dateneingabegerät in Form eines Stifts.

Der Routenplan sieht die Standortreihenfolge A, B, C, D und E vor, wie sie in der linken Spalte der Tabelle definiert ist. Abweichend von diesem Routenplan wurde die tatsächliche Route mit der Standortreihenfolge A, C, F, D, E durchgeführt, wie in der Tabelle "STIFTDATEN" zu sehen ist. Diese Abweichungen werden in der Tabelle "FEHLERDATENSÄTZE" dargestellt. Der nicht angefahrene Standort B führt zu einem Eintrag in der Tabelle der Fehlerdatensätze, in dem die Ordnungszahl in der Reihenfolge gemäß Routenplan ("2"), die Standortnummer ("B") und die Bezeichnung des Fehlers aufgeführt ist. Die Bezeichnung des Fehlers lautet in diesem Fall "N. ANGEFAHREN" für "nicht angefahren". In analoger Weise wird der zusätzlich angefahrene Standort F in der Tabelle der Fehlerdatensätze aufgeführt. Da dieser Standort im Routenplan nicht vorgesehen ist, hat er keine Ordnungszahl innerhalb der Reihenfolge der Standorte. Der Eintrag in der Tabelle der Fehlerdatensätze erhält daher in diesem Beispiel die Ordnungszahl 999. Die Zahl 999 wird in der Regel nicht für Routenpläne gebraucht, da die Routenpläne normalerweise eine geringere Anzahl an Standorten aufweisen. Der Eintrag für den Standort F enthält auch die Standortnummer und eine Bezeichnung des Fehlers, die in diesem Fall "N. IN LIST" für "nicht in Liste" lautet.

Die Kenntnis der Abweichungen von den Routenplänen ist wichtig für die Einsatzplanung, da dies zu Änderungen der Einsätzpläne für den folgenden Tag oder die folgenden Tagen führen kann. In dem behandelten Beispiel sollte der Standort B am nächsten Tag angefahren werden, um eine Überfüllung zu vermeiden. Für Standort F gilt dagegen, dass dieser am folgenden Tag wahrscheinlich nicht angefahren werden muss.

Die Erfindung wurde anhand eines Beispiels beschrieben, welches nicht als Beschränkung der Erfindung anzusehen ist. Dem Fachmann werden sich vorteilhafte Anwendungsmöglichkeiten, Erweiterungen und Verbesserungen der Erfindung erschließen, die von den nachfolgenden Ansprüchen mit erfasst werden.

## Patentansprüche

1. Einsatzplanungssystem für Serviceeinsätze an Objekten, umfassend:
- eine Vielzahl von Kennungsträgern, wobei jeder Kennungsträger einem bestimmten Objekt zugeordnet ist und eine Kennung umfasst, die das bestimmte Objekt eindeutig identifiziert;
- ein mobiles Datenerfassungsgerät, das ausgelegt ist zum Erfassen und temporären Speichern einer Vielzahl von Kennungen und von Objektzustandsdaten, die jeweils einer bestimmten Kennung zugeordnet sind;
- einen Datenspeicher zur Speicherung der von dem mobilen Dateneingabegerät temporär gespeicherten Kennungen und Objektzustandsdaten, wobei der Datenspeicher mit dem mobilen Datenerfassungsgerät zur Übermittlung der gespeicherten Kennungen und der Objektzustandsdaten zumindest mittelbar koppelbar ist;
- ein Auswertungsmodul, das ausgelegt ist, auf die im Datenspeicher gespeicherten Kennungen und Objektzustandsdaten zuzugreifen, diese zu analysieren und mittels der gespeicherten Kennungen und Objektzustandsdaten eine Optimierung eines Einsatzplans für zukünftige Serviceeinsätze an den Objekten durchzuführen.

2. Einsatzplanungssystem nach Anspruch 1, wobei das Auswertungsmodul dazu ausgelegt ist, im Rahmen der Optimierung eine Serviceintensität der einzelnen Objekte zu bestimmen und die Serviceintensität für eine Häufigkeit der zukünftigen Serviceeinsätze zu berücksichtigen.

3. Einsatzplanungssystem nach Anspruch 1 oder 2, wobei das Auswertungsmodul weiterhin ausgelegt ist, im Zusammenhang mit der Optimierung des Einsatzplans die gespeicherten Kennungen und Objektzustandsdaten auf im Wesentlichen regelmäßige Muster zu untersuchen.

4. Einsatzplanungssystem nach einem der vorangehenden Ansprüche, wobei die Objektzustandsdaten zumindest eines von Verschmutzungsgrad, Umfeldverschmutzungsgrad und Füllstand umfassen.

5. Einsatzplanungssystem nach einem der vorangehenden Ansprüche, wobei die Kennung von einem Strichcode, einem Matrixcode, einem alphanumerischen Code oder einer RFID-Kennung repräsentiert wird.

6. Verfahren zur Einsatzplanung von Serviceeinsätzen an Objekten umfassend:
- Erfassen von Objektzustandsdaten und einer Kennung während eines Serviceeinsatzes an einem bestimmten Objekt, wobei die Kennung dem bestimmten Objekt zugeordnet ist und das bestimmte Objekt eindeutig identifiziert;
- temporäres Speichern der Objektzustandsdaten und der Kennung auf einem mobilen Dateneingabegerät;
- Übermitteln der gespeicherten Kennung und der Objektzustandsdaten von dem mobilen Dateneingabegerät an einen Datenspeicher;
- Auswerten der im Datenspeicher gespeicherten Kennungen und Objektzustandsdaten;
- Optimieren eines Einsatzplans für zukünftige Serviceeinsätze an den Objekten mittels der gespeicherten Kennungen und Objektzustandsdaten.

7. Verfahren nach Anspruch 6, wobei das Optimieren des Einsatzplans für zukünftige Serviceeinsätze umfasst:
- Bestimmen von Serviceintensitäten der einzelnen Objekte;
- Berücksichtigung der Serviceintensitäten für eine Häufigkeit der zukünftigen Serviceeinsätze.

8. Verfahren nach Anspruch 6 oder 7, wobei während des Optimierens des Einsatzplans die gespeicherten Kennungen und Objektzustandsdaten auf im Wesentlichen regelmäßige Muster untersucht werden.

9. Verfahren nach einem der Ansprüche 6 bis 8, wobei die Objektzustandsdaten zumindest eines von Verschmutzungsgrad, Umfeldverschmutzungsgrad und Füllstand umfassen.

10. Verfahren nach einem der Ansprüche 6 bis 9, wobei die Kennung von einem Strichcode, einem Matrixcode, einem alphanumerischen Code oder einer RFID-Kennung repräsentiert wird.

11. Computerprogrammprodukt, welches in einen Speicher eines Computer ladbar ist, mit Programm-Mitteln, um die Schritte eines Verfahrens nach einem der Ansprüche 5 bis 8 auszuführen, wenn das Programm in dem Computer ausgeführt wird.
